# EUROPEAN PATENT SPECIFICATION

(11) **EP 0 367 618 B1**
(45) Date of publication and mention of the grant of the patent: **14.09.1994**
(21) Application number: 89311393.6
(22) Date of filing: 02.11.1989
(51) Int. Cl.: B01D 53/04, C01B 31/18, C10K 1/32

(54) **Process for producing carbon monoxide gas**
Verfahren zur Herstellung von Kohlenstoffmonoxid
Procédé de production de monoxyde de carbone

(30) Priority: 04.11.1988 JP 278804/88
(43) Date of publication of application: 09.05.1990
(73) Proprietor: MITSUI ENGINEERING & SHIPBUILDING CO., LTD, Tokyo 104 (JP)
(72) Inventor: Ibaragi, Shoichi, Ichihara-shi Chiba-ken (JP); Ikumi, Shinnosuke, Ichihara-shi Chiba-ken (JP); Mikami, Koichi, Ichihara-shi Chiba-ken (JP); Ueda, Mikio, Ichihara-shi Chiba-ken (JP)
(74) Representative: Jenkins, Peter David

(56) References cited:
- EP-A- 0 103 070
- EP-A- 0 129 444
- EP-A- 0 314 040
- US-A- 4 512 780
- US-A- 4 723 966

## Description

This invention relates to a process for producing carbon monoxide (CO) gas used as a basic material for various chemical products such as methanol, acetic acid, phosgen, oxo synthesis products, etc., using hydrocarbon compounds such as natural gas, propane, buthane, naphtha, coal, etc. as its raw material.

Heretofore, there have been known a process consisting of reforming hydrocarbon compounds with steam, carbon dioxide (CO₂), etc., removing moisture, removing CO₂ with an absorbing solution such as MEA, etc., liquefying and separating hydrogen from the top of the liquified material and CO from the bottom thereof (Low-temperature separation process), a process consisting of absorbing CO with a solution for selectively absorbing CO such as a toluene solution of CuAℓCℓ₄, heating the solution having absorbed CO and separating and recovering CO (COSORB process), etc.

Since low-temperature separation process requires CO₂ absorber, liquifying means and distilling means, a number of devices and equipments, are necessary and a large quantity of energy is consumed; thus effort for energy saving has been made. As a result, the process has required a complicated heat-exchange system. On the other hand, the COSORB process is a technique monopolied by TENECO Company, LTD. in the U.S.A. and it has drawbacks such as an expensive technical license fee, a deterioration of the absorber, a complicated process for recovering a solvent for the absorber, and further a large quantity of steam for regenerating the absorbing solution. Both the process employ irreversible steps of gas and liquid phase change and gas absorption, as a separation means. Hence, the processes have been commercially unsatisfactory in the aspect of equipments and energy consumption.

US-A-4723966 discloses a pressure swing adsorption (PSA) process wherein binary gas purification is effected from a single adsorbent bed. An adsorbent bed is charged under pressure with a gas mixture having some components that are more adsorbable than others. The process causes the bed to be polarized with one end of the bed containing the more adsorbable components and the other end containing the less adsorbable components. Once charged, the bed is depressurized simultaneously from both ends, thus removing the separated components from their respective ends.

EP-A-0129444 discloses a process for separating carbon monoxide from a feed gas comprising CO₂, CO and less adsorbable component than CO through PSA by using at least two adsorption columns in two stage adsorption operation which comprises a first adsorption stage for removing CO₂ from said feed gas and a second adsorption stage for separating CO from gaseous mixture withdrawn from the first adsorption stage.

In view of the drawbacks of the prior art, an aim of the present invention is to provide a process for producing CO gas capable of separating and recovering it in a high concentration, at a small number of steps and in a small quantity of power.

The present invention provides a process for producing carbon monoxide gas, comprising the following steps:
a step of introducing a raw material gas containing carbon dioxide (CO₂), methane (CH₄), carbon monoxide (CO), nitrogen (N₂) and hydrogen (H₂) into a pressure swing adsorption cycle system;
a step of adsorbing CO₂, methane, CO, N₂ and H₂ in an adsorption column of said system to obtain a H₂-rich gas or a N₂-rich gas passed therefrom;
a first depressurising step in the cocurrent direction in which said adsorption column is depressurized to 101 to 507 kPa (1-5 atm) in the same gas current direction as that in said adsorption step;
a second depressurizing step in the cocurrent direction in which said adsorption column is depressurized below atmospheric pressure in the same gas current direction as that in the adsorption step to obtain a CO rich gas desorbed therefrom;
a step of depressurizing or purging the adsorption column in a gas current direction counter to that in said adsorption step just prior to start of break through of methane and CO₂ to obtain a CO₂-rich gas discharged therefrom; and
a step of repressurizing the adsorption column in the counter current direction using a H₂-rich gas or a N₂-rich gas.

The raw material gas can be a by-produced gas from a steel converter, reformed or partially oxidized hydrocarbons, etc.

The H₂-rich gas or the N₂-rich gas at the step of repressurizing may be one obtained at the adsorption step or at the beginning of the depressurized step in the cocurrent direction.

The H₂- or N₂-rich gas obtained in the adsorption step may be utilized for repressurizing another column.

The H₂- or N₂-rich gas obtained at the beginning of the depressurizing step in the cocurrent direction may be utilized for equalizing or purging another column.

The CO-rich gas at the depressurizing step in the cocurrent direction may be obtained by depressurizing the column down to 4 to 26.7 kPa (30-200 torr) by means of a vacuum pump.

The purging in the counter current direction may be carried out by purging with H₂- or N₂-rich gas at a normal pressure or at 4 to 26.7 kPa (30-200 torr) by means of a vacuum pump.

Embodiments of the present invention will now be described by way of example only with reference to the accompanying drawings, in which:-
Fig. 1 shows a flow sheet illustrating a representative, four column type, pressure swing adsorption cycle system used in the present invention.
Fig. 2 shows a chart illustrating a flow diagram and pressure conditions in the Example of the present invention.
Fig. 3 shows a chart illustrating a process for obtaining a concentrated CO gas or a CO-rich gas from a synthesis gas according to the present invention.
Fig. 4 shows a chart illustrating a process for obtaining a high purity CO gas from a synthesis gas according to the present invention.
Fig. 5 shows a chart illustrating a process for obtaining a high purity CO gas from a by-produced gas such as converter gas, according to the present invention.

The present invention will be described in more detail by way of Example, but it should not be construed to be limited thereto.

### Example

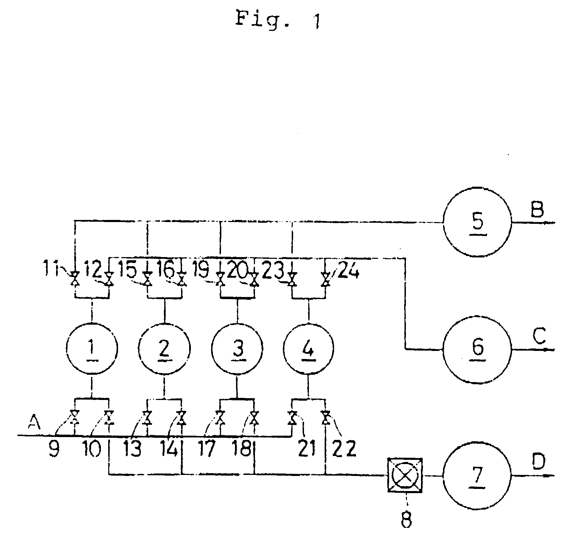

Fig. 1 shows of a flow sheet illustrating a system for pressure swing adsorption cycle using four adsorption columns, and the following Table 1 shows a sequence of the respective steps using the system:

**Table 1**

| | | | | |
|---|---|---|---|---|
| Column 1 | adsorption | depressurizing in the cocurrent direction | depressurizing or purging in the counter current direction | repressurizing in the counter current direction |
| Column 2 | depressurizing or purging in the counter current direction | repressurizing in the counter current direction | adsorption | depressurizing in the cocurrent direction |
| Column 3 | repressurizing in the counter current direction | adsorption | depressurizing in the cocurrent direction | depressurizing or purging in the counter current direction |
| Column 4 | depressurizing in the cocurrent direction | depressurizing or purging in the counter current direction | repressurizing in the counter current direction | adsorption |
| Note: The cocurrent direction refers to the same gas current direction as that of raw material gas at the adsorption step, and the counter current direction refers to a gas current direction reverse to that of the raw material gas at the adsorption step. | | | | |

The system of Fig. 1 consists of adsorption columns 1-4, gas storage tanks 5-7 storing the respective component gases, vacuum pump 8, and pipelines and valves 9-24 connecting the respective pipelines. The respective steps of the present invention will be described referring to Fig. 1, particularly, adsorption column 1 as an example.
(1) Adsorption step
   A raw material gas A (101 to 3040 kPa (1 to 30 atm) at normal temperature) having left a reforming furnace, a cracking furnace, a converter, etc. and having a moisture removed therefrom is introduced into an adsorption column 1 under the original pressure as it has, or pressurized to a suitable valve (101 to 3040 kPa) (1-30 atm). In the adsorption column 1, adsorption zones of CO₂, methane, CO, N₂ and H₂ in this order are formed (opened valves: 9 and 11 and closed valves: 10 and 12), and just before CO is contained in exit gas, the step is finished, followed by the next step.
(2) A first depressurising step in the cocurrent direction
   The gas inside the adsorption column 1 is discharged into a tank 6 under a lower pressure (preferably 101 to 507 kPa) (1-5 atm) in the same gas current direction as that at the adsorption step (opened valve: 12 and closed valves: 9, 10 and 11).
(3) At that time, a second depressurizing step in the cocurrent direction is performed wherein a CO-rich gas is released from the CO adsorption zone, and recovered to give a product. Just before methane and CO₂ are contained in the exit gas (or just before these gases exceed a tolerable content), the step is finished, followed by the next step.
   The lower the pressure at the depressurizing step in the cocurrent direction, the higher the concentration of CO; hence if the pressure is reduced down to 4 to 26.7 kPa (30-200 torr) by means of a vacuum pump, heigher purity CO can be obtained. On the other hand, the gas desorbed under a relatively high pressure at the beginning of the step is not made a product gas, but for example, it can be mixed with a H₂-rich gas B or a CO₂-rich gas D. Also it can be utilized for repressurizing of other columns by providing a step of equalizing the pressure to that of other columns.
(4) Depressurizing or purging step in the counter current direction
   The adsorption column is further depressurized to about 4 to 20 kPa (30-150 torr), preferably by means of a vacuum pump, in the gas current direction counter to that at the adsorption step (opened valve: 10 and closed valves: 9, 11 and 12). This step may be replaced by a purging step with H₂- and N₂-rich gas under a normal pressure or a reduced pressure, obtained at the adsorption step and the depressurizing step in the cocurrent direction. The exit gas at that time is a CO₂-rich gas D which is rich in CO₂ and CH₄ and contains a certain quantity of CO, N₂ and H₂.
(5) Repressurizing step in the counter current direction
   A portion of a H₂ or N₂-rich gas obtained at the above adsorption step is introduced into the adsorption column which has been depressurized to a definite pressure and from which most of the adsorbed gas has been discharged, in the gas current direction counter to that at the adsorption step, to repressurize the column to the original pressure of the adsorption step (opened valve: 11 and closed valves: 9, 10 and 12). By repeating the above steps in adsorption columns 1 to 4, the process of the present invention is carried out.

In the above Example, the set of valves shown in the figure is a mere example, and in order to achieve a smooth gas current at the respective steps, more complicated sets may, of course, be employed. Further, the sequence of the respective steps also shows the basic example of the present invention, and for example, by adding a pressure-equalizing step thereto, it is possible to reduce the capacity of the gas storage tank. Further, four adsorption columns are used above, bud the number or the column is not limited and may be one or more, and it is obvious that the smaller the number of columns, the smaller the number of steps at which continuous operation is carried out.

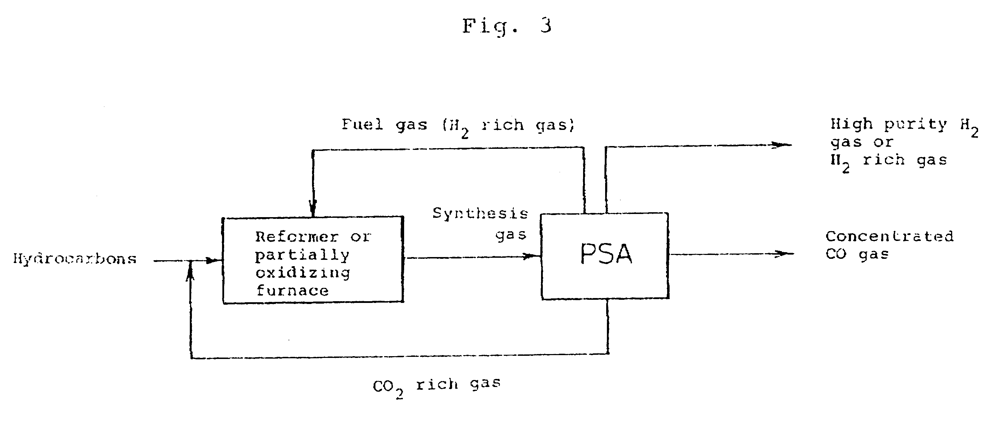

Next, Fig. 3 shows a flow sheet illustrating a process for obtaining a concentrated CO gas or CO-rich gas from a synthesis gas obtained by a reformer or partially oxidizing furnace, using the pressure swing adsorption cycle (PSA) of the present invention.

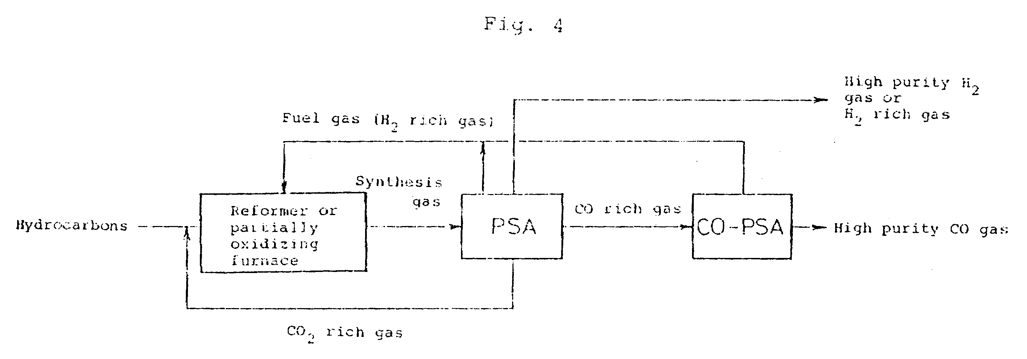

Fig. 4 shows a flow sheet illustrating a process of obtaining a CO-rich gas from a similar synthesis gas using PSA of the present invention, followed by further treating the resulting gas by means of CO-PSA (CO pressure swing adsorption cycle) system to obtain a high purity CO gas.

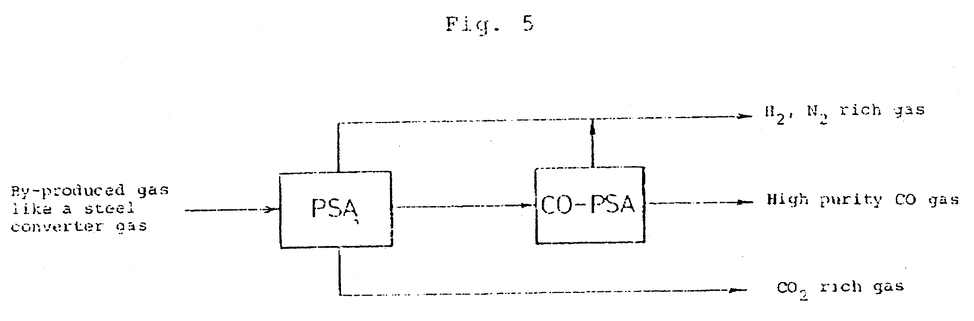

Fig. 5 shows a flow sheet illustrating a process of treating a CO-rich gas obtained by treating a by-produced gas such as converter gas by means of PSA system, further by means of CO-PSA system as shown in Fig. 4 to obtain a high purity CO gas, a N₂-rich gas and a CO₂-rich gas, respectively. CO-PSA system in the processes shown in Fig. 4 and Fig. 5 may be replaced by a conventional CO-purifying apparatus.

### Example 1

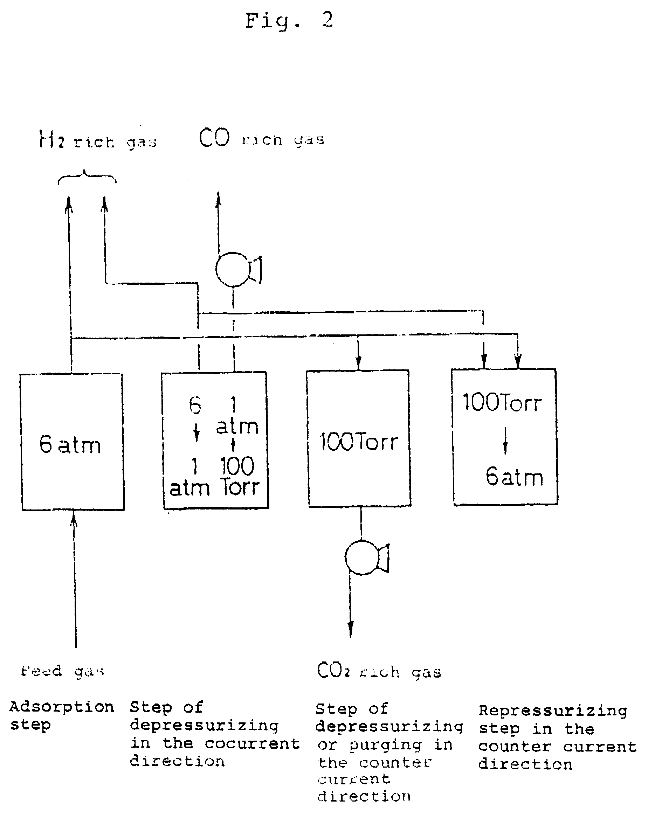

Using a four column type PSA system having an adsorber filled therein, and under the conditions shown in Fig. 2, the performance of apparatus by way of sequence of the respective steps, each for 180 seconds was measured. The following results were obtained:

**Table 2**

| | | Raw material gas A | H₂-rich gas B | CO-rich gas C | CO₂-rich gas D |
|---|---|---|---|---|---|
| gas current (Nℓ/hr) | | 184 | 96 | 43 | 45 |
| Composition (vol. %) | CO | 38.1 | 20.8 | 95.7 | 20.0 |
| | CO₂ | 14.8 | 0 | 0.7 | 60.0 |
| | CH₄ | 1.3 | 0 | 1.2 | 4.4 |
| | H₂ | 45.8 | 79.2 | 2.4 | 15.6 |

### Example 2

Example 1 was repeated except that the current of raw material gas was increased as shown in Table 3. The results shown in Table 3 were obtained.

**Table 3**

| | | Raw material gas A | H₂-rich gas B | CO-rich gas C | CO₂-rich gas D |
|---|---|---|---|---|---|
| gas current (Nℓ/hr) | | 293 | 164 | 50 | 79 |
| Composition (vol. %) | CO | 15.9 | 1.1 | 81.2 | 5.4 |
| | CO₂ | 11.5 | 0 | 0.4 | 42.3 |
| | CH₄ | 4.4 | 0 | 2.6 | 14.7 |
| | H₂ | 68.2 | 98.9 | 15.6 | 37.7 |

According to the present invention, by using a simple PSA system, without using an expensive conventional apparatus such as low-temperature separation apparatus, gas-absorbing apparatus, etc. in order to produce CO gas, it is possible to obtain a high purity CO gas along with energy-saving and man power-saving. Further, according to the present invention, it is possible to separate at least three kinds of bases composed mainly of H₂, CO and CO₂; hence the process of the present invention is very favorable in the aspect of utilizing these respective component gases. Further, according to the conventional PSA system, it is possible to separate only one component gas per one equipment; hence the above effectiveness could not be expected.

## Claims

1. A process for producing carbon monoxide gas, comprising the following steps:
a step of introducing a raw material gas containing carbon dioxide (CO₂), methane (CH₄), carbon monoxide (CO), nitrogen (N₂) and hydrogen (H₂) into a pressure swing adsorption cycle system;
a step of adsorbing CO₂, methane, CO, N₂ and H₂ in an adsorption column of said system to obtain a H₂-rich gas or a N₂-rich gas passed therefrom;
a first depressurizing step in the cocurrent direction in which said adsorption column is depressurized to 101 to 507 kPa (1-5 atm) in the same gas current direction as that in said adsorption step;
a second depressurizing step in the cocurrent direction in which said adsorption column is depressurized below atmospheric pressure in the same gas current direction as that in the adsorption step to obtain a CO rich gas desorbed therefrom;
a step of depressurizing or purging the adsorption column in a gas current direction counter to that in said adsorption step just prior to start of break through of methane and CO₂ to obtain a CO₂-rich gas discharged therefrom; and
a step of repressurizing the adsorption column in the counter current direction using a H₂-rich gas or a N₂-rich gas.

2. A process according to claim 1, wherein the H₂-rich gas or the N₂-rich gas at the step of repressurizing is one obtained at the adsorption step or at the first depressurizing step in the cocurrent direction.

3. A process according to claim 1, wherein said H₂- or N₂-rich gas obtained in the adsorption step is utilized for repressurizing another column.

4. A process according to any one of claims 1 to 3, wherein said H₂- or N₂-rich gas obtained at the first depressurizing step in the cocurrent direction is utilized for equalizing or purging another column.

5. A process according to any one of the preceding claims, wherein said CO-rich gas is one obtained by the second depressurizing step in which said column is depressurized down to 4 to 26.7 kPa by means of a vacuum pump.

6. A process according to any one of the preceding claims, wherein said purging in the counter current direction is carried out by purging with H₂- or N₂-rich gas at a normal pressure or at 4 to 26.7 kPa by means of a vacuum pump.

7. A process according to any one of the preceding claims, wherein a high concentration gas of CO₂ and methane obtained at said depressurizing step in the counter current direction is mixed with said raw material gas to enhance CO concentration in the gas.

8. A process according to claim 7, wherein said raw material gas is obtained from a reformer, a partially oxidizing furnace of hydrocarbons or a steel converter.

9. A process according to any one of the preceding claims, wherein said pressure swing adsorption cycle system is combined with a CO pressure swing adsorption cycle system to obtain a high purity CO gas from a CO-rich gas.

## Patentansprüche

1. Verfahren zum Herstellen von Kohlenmonoxidgas, welches Verfahren die folgenden Schritte umfaßt:
einen Schritt zum Einbringen eines Rohmaterialgases, welches Kohlendioxid (CO₂), Methan (CH₄), Kohlenmonoxid (CO), Stickstoff (N₂) und Wasserstoff (H₂) enthält, in ein Druckwechseladsorptionszyklussystem;
einen Schritt zum Adsorbieren von CO₂, Methan, CO, N₂ und H₂ in einer Adsorptionssäule dieses Systems, um ein H₂-reiches Gas oder ein N₂-reiches Gas, das durchkommt, zu erhalten;
einen ersten Schritt zum Absenken vom Druck in der Gleichstromrichtung, in welchem der Druck in der Adsorptionssäule in der gleichen Gasstromrichtung wie jene im Adsorptionsschritt auf 101 bis 507 kPa (1-5 Atm.) abgesenkt wird;
einen zweiten Schritt zum Absenken von Druck in der Gleichstromrichtung, in welchem der Druck in der Adsorptionssäule in der gleichen Gasstromrichtung wie jene im Adsorptionsschritt unter atmospharischen Druck abgesenkt wird, um ein CO-reiches Gas, welches aus ihr desorbiert wird, zu erhalten;
einen Schritt zum Absenken von Druck oder zum Spülen der Adsorptionssäule in einer Gasstromrichtung entgegen jener im Adsorptionsschritt, unmittelbar bevor Methan und CO₂ durchzubrechen beginnt, um ein CO₂-reiches Gas, welches von ihr abgegeben wird, zu erhalten; und
einen Schritt zum erneuten Unter-Druck-Setzen der Adsorptionssäule in der Gegenstromrichtung, wobei ein H₂-reiches Gas oder ein N-reiches Gas verwendet wird.

2. Verfahren gemäß Anspruch 1, worin das H₂-reiche Gas oder das N₂-reiche Gas beim Schritt zum erneuten Unter-Druck-Setzen eines ist, welches beim Adsorptionsschritt oder beim ersten Schritt zum Druckabsenken in der Gleichstromrichtung erhalten wird.

3. Verfahren gemäß Anspruch 1, worin das H₂- oder N₂-reiche Gas, welches im Adsorptionsschritt erhalten wird, zum erneuten Unter-Druck-Setzen einer anderen Säule verwendet wird.

4. Verfahren gemäß einem der Ansprüche 1 bis 3, worin das H₂- oder N₂-reiche Gas, welches beim ersten Schritt zum Druckabsenken in der Gleichstromrichtung erhalten wird, zum Ausgleichen oder zum Spülen einer anderen Säule verwendet wird.

5. Verfahren gemaß einem der vorhergehenden Ansprüche, worin das CO-reiche Gas eines ist, das durch den zweiten Schritt zum Druckabsenken, in welchem der Druck in der Säule auf 4 bis 26,7 kPa mittels einer Vakuumpumpe abgesenkt wird, erhalten wird.

6. Verfahren gemäß einem der vorhergehenden Ansprüche, worin das Spülen in der Gegenstromrichtung ausgeführt wird, indem mit H₂- oder N₂-reichem Gas bei Normaldruck oder bei 4 bis 26,7 kPa mittels einer Vakuumpumpe gespült wird.

7. Verfahren gemaß einem der vorhergehenden Ansprüche, worin ein Gas mit hoher Konzentration an CO₂ und Methan, welches bei dem Schritt zum Druckabsenken in der Gegenstromrichtung erhalten wird, mit dem Rohmaterialgas gemischt wird, um die CO-Konzentration im Gas zu erhöhen.

8. Verfahren gemaß Anspruch 7, worin das Rohmaterialgas aus einem Reformer, einem Ofen zum teilweisen Oxydieren von Kohlenwasserstoffen oder aus einem Stahlkonverter erhalten wird.

9. Verfahren gemäß einem der vorhergehenden Ansprüche, worin das Druckwechseladsorptionszyklussystem mit einem CO-Druckwechseladsorptionszyklussystem vereinigt wird, um ein CO-Gas hoher Reinheit aus einem CO-reichen Gas zu erhalten.

## Revendications

1. Procédé pour produire du gaz monoxyde de carbone, comprenant les étapes suivantes:
une étape d'introduction d'un gaz de matière première contenant du dioxyde de carbone (CO₂), du méthane (CH₄), du monoxyde de carbone (CO), de l'azote (N₂) et de l'hydrogène (H₂) dans un système de cycle d'adsorption à oscillation de pression;
une étape d'adsorption du CO₂, du méthane, du CO, du N₂ et du H₂ dans une colonne d'adsorption dudit système pour obtenir un gaz riche en H₂ ou un gaz riche en N₂ passée par celle-ci;
une première étape de dépressurisation dans la direction cocourant dans laquelle ladite colonne d'adsorption est dépressurisée jusqu'à une valeur comprise entre 101 et 507 kPA (1-5 atm) dans la même direction de courant de gaz que celle dans ladite étape d'adsorption;
une seconde étape de dépressurisation dans la direction cocourant dans laquelle ladite colonne d'adsorption est dépressurisée an dessous de la pression atmosphérique dans la même direction de courant de gaz que celle dans l'étape d'adsorption pour obtenir un gaz riche en CO désorbé de celle-ci;
une étape de dépressurisation ou de purge de la colonne d'adsorption dans une direction de courant de gaz opposée à celle dans ladite étape d'adsorption juste avant de démarrer la pénétration du méthane et du CO₂ pour obtenir un gaz riche en CO₂ déchargée de celle-ci; et
une étape de repressurisation de la colonne d'adsorption dans la direction de courant opposée en utilisant un gaz riche en H₂ ou un gaz riche en N₂.

2. Procédé selon la revendication 1, où le gaz riche en H₂ ou le gaz riche en N₂ à l'étape de repressurisation est un gaz obtenu à l'étape d'adsorption ou à la première étape de dépressurisation dans la direction cocourant.

3. Procédé selon la revendication 1, où ledit gaz riche en H₂ ou en N₂ obtenu dans l'étape d'adsorption est utilisé pour repressuriser un autre colonne.

4. Procédé selon une quelconque des revendications 1 à 3, où ledit gaz riche en H₂ en N₂ obtenu à la première étape de dépressurisation dans la direction cocourant est utilisé pour compenser ou purger une autre colonne.

5. Procédé selon une quelconque des revendications précédentes, où ledit gaz riche en CO est un gaz obtenu par la seconde étape de dépressurisation dans laquelle ladite colonne est dépressurisée jusqu'à une valeur comprise entre 4 et 26,7 kPA au moyen d'une pompe à vide.

6. Procédé selon une quelconque des revendications précédentes, où ladite purge dans la direction de courant opposée est réalisée en purgeant avec un gaz riche en H₂ ou en N₂ à une pression normale ou à une valeur comprise entre 4 et 26,7 kPA au moyen d'une pompe à vide.

7. Procédé selon une quelconque des revendications précédentes, où un gaz de CO₂ et de méthane à une concentration élevée obtenu à ladite étape de dépresssurisation dans la direction de courant opposée est mélangé audit gaz de matière première pour renforcer la concentration en CO dans le gaz.

8. Procédé selon la revendication 7, où ledit gaz de matière première est obtenu à partir d'un reformateur, d'un four à oxydation partielle des hydrocarbures ou d'un convertisseur d'acier.

9. Procédé selon une quelconque des revendications précédentes, où ledit système de cycle d'adsorption à oscillation de pression est combiné avec un système de cycle d'adsorption de à oscillation de pression de CO pour obtenir un gaz CO de pureté élevée à partir d'un gaz riche en CO.
